# EUROPEAN PATENT APPLICATION

(11) **EP 4 269 489 A1**
(43) Date of publication of application: **01.11.2023**
(21) Application number: 21910667.1
(22) Date of filing: 20.12.2021
(51) Int. Cl.: C08K 5/00, C08L 23/00, C08L 53/00, C08L 53/02, C08L 67/00, C08L 91/00, C08L 101/08

(54) **THERMOPLASTIC ELASTOMER COMPOSITION AND MOLDED BODY**

(30) Priority: 25.12.2020 JP 2020217270; 15.09.2021 JP 2021150599
(71) Applicant: ENEOS Corporation, Chiyoda-ku Tokyo 100-8162 (JP)
(72) Inventor: MURAKAMI, Hiroaki, Tokyo 100-8162 (JP); YAMAKI, Kousuke, Tokyo 100-8162 (JP); CHINO, Keisuke, Tokyo 100-8162 (JP); SAKAI, Akane, Tokyo 100-8162 (JP)
(74) Representative: Müller-Boré & Partner Patentanwälte PartG mbB
(86) International application number: PCT/JP2021/046904
(87) International publication number: WO 2022/138522

(57) **Abstract**

To provide a thermoplastic elastomer composition excellent in resistance to compression set under a high-temperature environment, fluidity during melt molding, and heat sealing adhesiveness with a different material. The thermoplastic elastomer composition of the present invention includes a resin component and an additive, in which the resin component includes a styrene-based block copolymer containing a covalently crosslinked part, and a polyolefin having a weight average molecular weight of 80,000 or more and 500,000 or less, a content of the styrene-based block copolymer is 40% by mass or more and 95% by mass or less relative to the entire resin component, and a content of the polyolefin is 5% by mass or more and 60% by mass or less relative to the entire resin component; and the additive includes an acid-modified compound having a weight average molecular weight of 1,000 or more and less than 80,000 and having a functional group derived from a carboxylic acid- and/or its derivative, and/or a polyester compound, and a crosslinking agent capable of crosslinking at least one of the styrene-based block copolymer and the polyolefin.

## Description

### BACKGROUND OF THE INVENTION

### Field of the Invention

The present invention relates to a thermoplastic elastomer composition, more specifically, also relates to a thermoplastic elastomer composition suitable for insert injection molding. The present invention also relates to a molded article obtained with a thermoplastic elastomer composition.

### Background Art

Thermoplastic elastomer compositions are industrially extremely useful materials because of capable of being molten at processing temperatures during molding and processing and being molded by well-known resin molding methods. In recent years, thermoplastic elastomer compositions that can be insert injection-molded together with enclosures as different materials have been demanded for various packing applications for use under high-temperature environments.

For example, Patent Literature 1 has proposed a thermoplastic resin composition including an amorphous propylene-1-butene copolymer and a crystalline polypropylene resin, and an acid-modified polyolefin wax, for applications of films, sheets, bottles, and sealing materials. Patent Literature 2 has proposed a thermoplastic composition containing a propylene-based polymer, a polylactic acid-based resin, an epoxy group-containing ethylene-based polymer, an elastomer compound, and an acid-modified polyolefin wax, for applications of automobile interior and exterior parts and the like. Patent Literature 3 has proposed a soft elastomer composition in which excess plasticizer or/and softening agent is/are compounded to a main polymer containing a styrene-isoprene-styrene copolymer (SEPS) or a styrene-butadiene-styrene copolymer (SEBS) as a main component.

### Citation List

### Patent Literature

[Patent Literature 1] JP 2010-174196 A
[Patent Literature 2] JP 2010-254799 A
[Patent Literature 3] JP H10-273511 A

### SUMMARY OF THE INVENTION

### Technical Problem

However, the thermoplastic resin composition described in Patent Literature 1 has an inferior compression set at 100°C of 75 to 84%, and cannot withstand use as a packing or a sealing material. The thermoplastic composition described in Patent Literature 2 is inferior in compression set, and cannot withstand use as a packing or a sealing material. The soft elastomer composition described in Patent Literature 3 has the problem of having no heat sealing adhesiveness with a different material at all because a styrene copolymer as a main polymer has no heat sealability with a different material and furthermore a large amount of a plasticizer such as an isoparaffin-based oil is added. The present inventors have then made studies about a reduction in amount of addition of a plasticizer in order to improve heat sealing adhesiveness, but the resultant is deteriorated in fluidity and is not suitable for insert injection molding. Additionally, the resultant is easily increased in hardness, and is not suitable for applications of packing and sealing materials, weather strips, and interior skin materials.

Accordingly, an object of the present invention is to provide a thermoplastic elastomer composition excellent in resistance to compression set under a high-temperature environment, fluidity during melt molding, and heat sealing adhesiveness with a different material.

### Solution to Problem

The present inventors have made intensive studies in order to solve the above problems, and as a result, have found that the above problems can be solved by compounding a resin component including a styrene-based block copolymer and a polyolefin at a specific composition ratio, with an acid-modified compound having a functional group derived from a carboxylic acid- and/or its derivative, and a crosslinking agent capable of crosslinking at least one of the styrene copolymer and the polyolefin, thereby have completed the present invention.

In other words, one aspect of the present invention provides
a thermoplastic elastomer composition comprising a resin component and an additive, wherein
the resin component comprises a styrene-based block copolymer containing a covalently crosslinked part, and a polyolefin having a weight average molecular weight of 80,000 or more and 500,000 or less, a content of the styrene-based block copolymer is 40% by mass or more and 95% by mass or less relative to the entire resin component, and a content of the polyolefin is 5% by mass or more and 60% by mass or less relative to the entire resin component, and
the additive comprises an acid-modified compound having a weight average molecular weight of 1,000 or more and less than 80,000 and having a functional group derived from a carboxylic acid- and/or its derivative, and/or a polyester compound, and a crosslinking agent capable of crosslinking at least one of the styrene-based block copolymer and the polyolefin.

In an aspect of the present invention, a content of the acid-modified compound is preferably 1 part by mass or more and 50 parts by mass or less based on 100 parts by mass of the resin component.

In an aspect of the present invention, a content of the polyester compound is preferably 1 part by mass or more and 70 parts by mass or less based on 100 parts by mass of the resin component.

In an aspect of the present invention, preferably, the polyolefin comprises at least one of polypropylene and maleic anhydride-modified polypropylene, and weight average molecular weights of the polypropylene and the maleic anhydride-modified polypropylene are 100,000 or more and 200,000 or less.

In an aspect of the present invention, preferably, the polyolefin comprises at least one of an ethylene-butene copolymer and a maleic anhydride-modified ethylene-butene copolymer, and weight average molecular weights of the ethylene-butene copolymer and the maleic anhydride-modified ethylene-butene copolymer are 80,000 or more and 160,000 or less.

In an aspect of the present invention, a weight average molecular weight of the acid-modified compound is preferably 10,000 or more and 77,000 or less.

In an aspect of the present invention, the acid-modified compound is preferably a maleic anhydride-modified compound.

In an aspect of the present invention, the maleic anhydride-modified compound is preferably at least one selected from the group consisting of a maleic anhydride-modified polyolefin, a maleic anhydride-modified polybutadiene, and an isobutylene-maleic anhydride copolymer.

In an aspect of the present invention, the styrene-based block copolymer is preferably at least one selected from the group consisting of a styrene-butadiene-styrene block copolymer, a styrene-isoprene-styrene block copolymer, a styrene-isoprene-butadiene-styrene block copolymer, a styrene-ethylene-butylene-styrene block copolymer, a styrene-ethylene-propylene-styrene block copolymer, and a styrene-ethylene-ethylene-propylene-styrene block copolymer.

In an aspect of the present invention, the crosslinking agent is preferably at least one selected from the group consisting of a peroxide-based crosslinking agent and a fatty acid metal salt-based crosslinking agent.

In an aspect of the present invention, preferably, the additive further comprises a plasticizer, and a content of the plasticizer is 5 parts by mass or more and 100 parts by mass or less based on 100 parts by mass of the resin component.

In an aspect of the present invention, the plasticizer is preferably a process oil.

In an aspect of the present invention, the thermoplastic elastomer composition is preferably used in insert injection molding.

In another aspect of the present invention, a molded article obtained with the thermoplastic elastomer composition is provided.

In another aspect of the present invention, the molded article is preferably a packing, a sealing material, a weather strip, or an interior skin material.

### Advantageous Effects of Invention

According to the present invention, a thermoplastic elastomer composition excellent in resistance to compression set under a high-temperature environment, fluidity during melt molding, and heat sealing adhesiveness with a different material can be provided. According to the present invention, a molded article obtained with such a thermoplastic elastomer composition can be provided.

### DETAILED DESCRIPTION OF THE INVENTION

### [Thermoplastic elastomer composition]

The thermoplastic elastomer composition of the present invention includes specified resin component and additive. The thermoplastic elastomer composition is excellent in resistance to compression set under a high-temperature environment and heat sealing adhesiveness with a different material, and thus is suitable in a packing, a sealing material, a weather strip, and an interior skin material. The thermoplastic elastomer composition is also excellent in fluidity during melt molding, and thus can be suitably used for insert injection molding. Hereinafter, each component will be described in detail.

### [Resin component]

The thermoplastic elastomer composition includes at least a styrene-based block copolymer containing a covalently crosslinked part, and a polyolefin, in a resin component. In general, a resin component of a thermoplastic elastomer composition, while includes a styrene copolymer containing a covalently crosslinked part and thus is excellent in compression set under a high-temperature environment, does not sufficiently achieve fluidity during melt molding. However, in the present invention, a polyolefin is compounded to thereby allow a styrene-based block copolymer phase to serve as a domain and allow a polyolefin phase to serve as a matrix, thereby enabling fluidity during melt molding to be obtained with favorable compression set being ensured.

### (Styrene-based block copolymer containing covalently crosslinked part)

In the present invention, the "styrene-based block copolymer" may be a copolymer having a styrene block structure at any site. The "covalently crosslinked part" may be a site at which styrene-based block copolymer molecules are mutually crosslinked by a covalent bond, and the form thereof is not particularly limited. The covalently crosslinked part at which styrene-based block copolymer molecules are mutually crosslinked is preferably made by at least one crosslinking selected from the group consisting of carbon crosslinking, oxygen crosslinking, and sulfur crosslinking, and is more preferably made by carbon crosslinking, from the viewpoint that not only more rigid crosslinking can be formed, but also simplicity of crosslinking formation is excellent.

Examples of the styrene-based block copolymer containing the covalently crosslinked part include a styrene-butadiene-styrene block copolymer (SBS), a styrene-isoprene-styrene block copolymer (SIS), a styrene-isoprene-butadiene-styrene block copolymer (SIBS), a styrene-ethylene-butylene-styrene block copolymer (SEBS), a styrene-ethylene-propylene-styrene block copolymer (SEPS), and a styrene-ethylene-ethylene-propylene-styrene block copolymer (SEEPS). In particular, SBS, SEBS, SIS, and SEEPS are more preferable, and SBS, SEBS, and SEEPS are further preferable. Such styrene-based block copolymers may be used singly or in combination of two or more kinds thereof.

In particular, two or more are preferably combined and used from the viewpoint that resistance to compression set under a high-temperature environment and fluidity during melt molding can be exerted in a well-balanced manner. For example, two or more, one decreased in crosslinking density after crosslinking (for example, SEBS) and another increased in crosslinking density after crosslinking (for example, SBS), are preferably selected and combined, and SBS and SEBS are more preferably combined and used. SBS and SEBS can be thus combined to thereby control the crosslinking density after crosslinking. SEBS has only about 1% by mol of a crosslinkable double bond and thus can decrease the crosslinking density after crosslinking, and SBS has 60 to 90% by mol of a crosslinkable double bond and thus can increase the crosslinking density after crosslinking. When SBS and SEBS are combined and used, SBS and SEBS may be used so that the mass ratio (SBS: SEBS) thereof is preferably 1:9 to 9:1, more preferably 2:8 to 8:2. When SBS and SEBS are combined and used, SEBS and radial SBS are preferably combined from the viewpoint of more enhancements in resistance to compression set under a high-temperature environment and fluidity during melt molding. The "radial" of SBS, here mentioned, refers to a structure of a molecular chain radially linked, and the "linear" thereof, here mentioned, refers to a structure of a straight molecular structure.

The content of styrene in the styrene-based block copolymer is preferably 10 to 70% by mass, more preferably 20 to 60% by mass. When the content of styrene is within the range, the balance between thermoplasticity and rubber elasticity is improved. The content of styrene in the styrene-based block copolymer can be measured by a method according to an IR method described in JIS K6239 (issued in 2007).

The weight average molecular weight (Mw) of the styrene-based block copolymer is preferably 30,000 or more and 1,000,000 or less, more preferably 100,000 or more and 800,000 or less, further preferably 200,000 or more and 700,000 or less from the viewpoint of mechanical strength and the like. The number average molecular weight (Mn) is preferably 10,000 or more and 600,000 or less, more preferably 50,000 or more and 550,000 or less, further preferably 100,000 or more and 500,000 or less. The dispersivity (Mw/Mn) in the molecular weight distribution is preferably 5 or less, more preferably 1 to 3. The weight average molecular weight (Mw), the number average molecular weight (Mn) and the dispersivity (Mw/Mn) in the molecular weight distribution can be determined with a so-called gel permeation chromatography (GPC) method.

A commercially available product may be used as the styrene-based block copolymer containing the covalently crosslinked part. Examples of the commercially available product usable here can include trade names "G1633", "D1101", "DX410", "G1651", and "D1111" manufactured by Kraton Corporation; trade names "V9461", "4055", "4077", "4099", and "Tafprene A" manufactured by Kurary Co., Ltd.; trade names "H1053" and "H1051" manufactured by Asahi Kasei Corporation; and trade names "GP3501", "GP3502", "GP3527", "GP3411", "GP9901", "GP7533", "GP7551" manufactured by Lee Chang Yung (LCY).

### (Polyolefin)

The polyolefin is not particularly limited, and a conventionally known polyolefin can be used. Examples of the polyolefin can include homopolymers of α-olefins such as ethylene, propylene, butene-1, pentene-1,2-methylbutene-1,3-methylbutene-1, hexene-1,3-methylpentene-1,4-methylpentene-1, 3,3-dimethylbutene-1, heptene-1, methylhexene-1, dimethylpentene-1, trimethylbutene-1, ethylpentene-1, octene-1, methylpentene-1, dimethylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1 and hexadecene-1, or copolymers of any two or more of these α-olefins as raw material monomers. In particular, a homopolymer of propylene (polypropylene) and an ethylene-butene copolymer are preferable. Such polyolefins may be used singly or in combination of two or more kinds thereof.

The polyolefin may be acid-modified by a conventionally known method. Such an acid-modified polyolefin may be a polyolefin resin modified with an acid, and is not particularly limited. Examples of the acid used for modification include a carboxylic acid and/or its derivative, and in particular an unsaturated carboxylic acid and/or its derivative are/is preferable. The unsaturated carboxylic acid and/or its derivative refer(s) to an unsaturated compound having one or more carboxy groups, an ester of an unsaturated carboxylic acid compound having a carboxy group with an alcohol, an amide of an unsaturated carboxylic acid compound having a carboxy group with an amine, and an unsaturated compound having one or more acid anhydride groups (for example, anhydride of unsaturated dicarboxylic acid). Examples of an unsaturated group can include a vinyl group, a vinylene group, and an unsaturated cyclic hydrocarbon group. Examples of the unsaturated carboxylic acid include acrylic acid, methacrylic acid, maleic acid, succinic acid, glutaric acid, fumaric acid, phthalic acid, tetrahydrophthalic acid, itaconic acid, citraconic acid, crotonic acid, nadic acid, and endo-cis-bicyclo[2,2,1]hept-5-ene-2,3-dicarboxylic acid. A derivative thereof may have a form of acid halide, amide, imide, ester, or the like, and examples thereof can include malenyl chloride, malenyl imide, maleic anhydride, citraconic anhydride, monomethyl maleate, and dimethyl maleate. In particular, an unsaturated dicarboxylic acid or its acid anhydride is preferable, and in particular, maleic acid or its acid anhydride is suitable.

The weight average molecular weight (Mw) of the polyolefin is 80,000 or more and 500,000 or less, preferably 85,000 or more, more preferably 90,000 or more, further preferably 100,000 or more, and preferably 400,000 or less, more preferably 350,000 or less, further preferably 300,000 or less from the viewpoint of mechanical strength and the like. In particular, the Mw of the polyolefin is preferably 85,000 or more and 500,000 or less, more preferably 90,000 or more and 400,000 or less, further preferably 100,000 or more and 350,000 or less. In particular, when the polyolefin corresponds to polypropylene and maleic anhydride-modified polypropylene, the Mw is preferably 100,000 or more and 200,000 or less. When the polyolefin corresponds to an ethylene-butene copolymer and a maleic anhydride-modified ethylene-butene copolymer, the Mw is preferably 80,000 or more and 160,000 or less. The weight average molecular weight (Mw) can be determined with a so-called gel permeation chromatography (GPC) method.

The content of the styrene-based block copolymer is 40% by mass or more and 95% by mass or less relative to the entire resin component, the lower limit value thereof is preferably 50% by mass or more, more preferably 55% by mass or less, further preferably 60% by mass or more, and the upper limit value thereof is preferably 90% by mass or less, more preferably 85% by mass or less.

The content of the polyolefin is 5% by mass or more and 60% by mass or less relative to the entire resin component, the lower limit value thereof is preferably 10% by mass or more, more preferably 15% by mass or less, and the upper limit value thereof is preferably 50% by mass or less, more preferably 45% by mass or less, further preferably 40% by mass or less.

When the contents of the styrene-based block copolymer and the polyolefin are within the above ranges, a thermoplastic elastomer composition where resistance to compression set under a high-temperature environment, fluidity during melt molding, and heat sealing adhesiveness with a different material are well balanced can be obtained.

### [Additive]

### (Acid-modified compound)

The thermoplastic elastomer composition preferably includes an acid-modified compound having a functional group derived from a carboxylic acid- and/or its derivative, as an additive. Examples of the functional group of the acid-modified compound include a carboxy group, a carbonyl group, an acid anhydride group, an ester group, and an amide group. More specific examples include an unsaturated carboxylic acid- and/or its derivative-derived functional group described below. The acid-modified compound may contain one or more of such functional groups. The acid-modified compound may contain other functional groups, such as a hydroxyl group or an ether group, as long as the performance of the thermoplastic elastomer composition is not impaired. The acid-modified compound having a functional group derived from a carboxylic acid- and/or its derivative can be compounded in the thermoplastic elastomer composition to thereby enhance heat sealing adhesiveness with a different material due to the functional group of the acid-modified compound in insert injection molding.

Examples of the acid-modified compound include a compound obtained by acid modification of a conventionally known polymer with a carboxylic acid and/or its derivative. The polymer here used can be, for example, the above polyolefin, or polybutadiene. The acid-modified compound also encompasses a copolymer of an α-olefin and an unsaturated carboxylic acid and/or its derivative.

The unsaturated carboxylic acid and/or its derivative refer(s) to an unsaturated compound having one or more carboxy groups, an ester of an unsaturated carboxylic acid compound having a carboxy group with an alcohol, an amide of an unsaturated carboxylic acid compound having a carboxy group with an amine, and an unsaturated compound having one or more acid anhydride groups (for example, unsaturated dicarboxylic acid anhydride). Examples of an unsaturated group can include a vinyl group, a vinylene group, and an unsaturated cyclic hydrocarbon group. Examples of the unsaturated carboxylic acid include acrylic acid, methacrylic acid, maleic acid, succinic acid, glutaric acid, fumaric acid, phthalic acid, tetrahydrophthalic acid, itaconic acid, citraconic acid, crotonic acid, nadic acid, and endo-cis-bicyclo[2,2,1]hept-5-ene-2,3-dicarboxylic acid. A derivative thereof may have a form of acid halide, amide, imide, ester, or the like, and examples thereof can include malenyl chloride, malenyl imide, maleic anhydride, citraconic anhydride, monomethyl maleate, and dimethyl maleate. In particular, an unsaturated dicarboxylic acid or its acid anhydride is preferable, and in particular, maleic acid or its acid anhydride is suitable.

The acid-modified compound is preferably a maleic anhydride-modified compound, and examples thereof include a maleic anhydride-modified polyolefin, a maleic anhydride-modified polybutadiene, and an isobutylene-maleic anhydride copolymer. Such maleic anhydride-modified compounds may be used singly or in combination of two or more kinds thereof.

The amount of modification with the unsaturated carboxylic acid in the acid-modified polyolefin resin is not particularly limited, but is preferably 0.1% by mass or more and 10% by mass or less, more preferably 0.5% by mass or more and 8.0% by mass or less, further preferably 1.0% by mass or more and 6.0% by mass or less, relative to the polyolefin resin before modification. When the amount of modification with the unsaturated carboxylic acid in the acid-modified polyolefin resin is within the above range, heat sealing adhesiveness with a different material can be enhanced.

A commercially available product may be used as the acid-modified compound. Examples of a commercially available product of a maleic anhydride-modified polyolefin wax include trade names "TOYOTAC PMA-L", "TOYOTAC PMA-F6", and "TOYOTAC PMA-LE" manufactured by TOYOBO CO., LTD., and DIACARNA 30M manufactured by Mitsubishi Chemical Corporation. Examples of a commercially available product of a maleic anhydride-modified liquid polybutadiene include trade names "Ricon 130MA8" and "Ricon 131MA17" manufactured by Cray Valley, and "Lithene ultra AL-15MA" manufactured by DKSH Japan. Examples of a commercially available product of the isobutylene-maleic anhydride copolymer include trade name "Isobam 04" manufactured by Kurary Co., Ltd.

The weight average molecular weight (Mw) of the acid-modified compound is 1,000 or more and less than 80,000, preferably 77,000 or less, more preferably 70,000 or less, further preferably 60,000 or less, and preferably 10,000 or more, more preferably 30,000 or more, further preferably 45,000 or more. In particular, the Mw of the acid-modified compound is preferably 10,000 or more and 77,000 or less, more preferably 30,000 or more and 70,000 or less, further preferably 45,000 or more and 60,000 or less. The weight average molecular weight (Mw) can be determined with a so-called gel permeation chromatography (GPC) method.

The content of the acid-modified compound is preferably 1 part by mass or more and 50 parts by mass or less, more preferably 5 parts by mass or more and 45 parts by mass or less, further preferably 10 parts by mass or more and 40 parts by mass or less based on 100 parts by mass of the resin component. When the content of the acid-modified compound is within the above range, heat sealing adhesiveness with a different material can be enhanced.

### (Polyester compound)

The thermoplastic elastomer composition preferably includes a polyester compound as an additive. The polyester compound may be any of crystalline and amorphous. Examples of the polyester compound include polyethylene terephthalate (PET), polytrimethylene terephthalate (PTT), polybutylene terephthalate (PBT), polyethylene naphthalate (PEN), and polybutylene naphthalate (PBN), and a modified polyester obtained by modification of an acid component or a diol component. Such polyester compounds may be used singly or in combination of two or more kinds thereof.

The weight average molecular weight (Mw) of the polyester compound is preferably 1,000 or more, more preferably 2,000 or more, further preferably 3,000 or more, and preferably 200,000 or less, more preferably 100,000 or less, further preferably 60,000 or less. In particular, the Mw of the polyester compound is preferably 1,000 or more and 200,000 or less, more preferably 2,000 or more and 100,000 or less, further preferably 3,000 or more and 60,000 or less. The weight average molecular weight (Mw) is a value determined with HLC-8220GPC manufactured by Tosoh Corporation, a column TSKgel SuperMultiporeHZ-M manufactured by Tosoh Corporation, solvent THF, a temperature of 40°C, and a standard polystyrene kit PStQuick MP-M for organic solvent-based size exclusion chromatography, manufactured by Tosoh Corporation, as a standard sample.

A commercially available product may be used as the polyester compound. Examples of commercially available products include trade names "Vylon resin 200", "Vylon resin 220", "Vylon resin GM-380", and "Vylon resin GA-6400" manufactured by TOYOBO CO., LTD.

The content of the polyester compound is preferably 10 parts by mass or more and 70 parts by mass or less, more preferably 20 parts by mass or more and 60 parts by mass or less, further preferably 30 parts by mass or more and 50 parts by mass or less based on 100 parts by mass of the resin component. When the content of the polyester compound is within the above range, heat sealing adhesiveness with a different material can be enhanced.

### (Crosslinking agent)

The thermoplastic elastomer composition includes a crosslinking agent capable of crosslinking at least one of the styrene-based block copolymer and the polyolefin, as an essential additive. The crosslinking agent is not particularly limited as long as it can form crosslinking of at least one of the styrene-based block copolymer and the polyolefin, and a peroxide-based crosslinking agent, a fatty acid metal salt-based crosslinking agent, a sulfur-based crosslinking agent, a phenol resin-based crosslinking agent, an amino resin-based crosslinking agent, a quinone-based crosslinking agent, a halogen-based crosslinking agent, an azo-based crosslinking agent, an aldehyde-based crosslinking agent, an epoxy-based crosslinking agent, a bipolar compound-based crosslinking agent, an optically crosslinking agent, or the like can be suitably used. In particular, a peroxide-based crosslinking agent, a fatty acid metal salt-based crosslinking agent, and a sulfur-based crosslinking agent are more preferable, and a peroxide-based crosslinking agent and a fatty acid metal salt-based crosslinking agent are particularly preferable.

Such a peroxide-based crosslinking agent is not particularly limited, and, for example, a crosslinking agent composed of a known peroxide capable of reacting with a crosslinkable double bond in a main chain of the styrene-based block copolymer and thus forming a covalently crosslinked part made by so-called carbon (oxygen) crosslinking can be appropriately used. The peroxide-based crosslinking agent is particularly preferably an organic peroxide. Examples of such an organic peroxide include dialkyl peroxides such as di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy)hexyne-3, 1,3-bis(t-butylperoxyisopropyl)benzene, and 1,1-di(t-hexylperoxy)-3,3,5-trimethylcyclohexane; peroxy esters such as t-butyl peroxy benzoate, t-butyl peroxy isopropyl monocarbonate, n-butyl-4,4-bis(t-butylperoxy)valerate, 2,5-dimethyl-2,5-di(benzoylperoxy)hexane, and 2,5-dimethyl-2,5-di(benzoylperoxy)hexyne-3; and diacyl peroxides such as diacetyl peroxide, lauroyl peroxide, dibenzoyl peroxide, p-chlorobenzoyl peroxide, and 2,4-dichlorobenzoyl peroxide. In particular, 2,5-dimethyl-2,5-di(t-butylperoxy)hexane or 1,3-bis(t-butylperoxyisopropyl)benzene can be suitably used.

Such an organic peroxide preferably has a one-minute half-life temperature of 50 to 250°C (more preferably 100 to 230°C) from the viewpoint of allowing the processing temperature to be suited. Examples of an organic peroxide satisfying such a condition include dialkyl peroxide compounds such as di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy)hexyne-3, 1,3-bis(t-butylperoxyisopropyl)benzene, and 1,1-di(t-hexylperoxy)-3,3,5-trimethylcyclohexane; and t-butyl peroxy benzoate, t-butyl peroxy isopropyl monocarbonate, n-butyl-4,4-bis(t-butyl peroxy) valerate, 2,5-dimethyl-2,5-di(benzoylperoxy) hexane, and 2,5-dimethyl-2,5-di(benzoylperoxy)hexyne-3.

Among such organic peroxides, 2,5-dimethyl-2,5-di(t-butylperoxy)hexane, 2,5-dimethyl-2,5-di(t-butylperoxy)hexyne-3, dicumyl peroxide, and 1,3-bis(t-butylperoxyisopropyl)benzene are more preferable, and 2,5-dimethyl-2,5-di(t-butylperoxy) hexane and 2,5-dimethyl-2,5-di(t-butylperoxy)hexyne-3 are particularly preferable, from the viewpoint of having a higher half-life temperature. Such peroxide-based crosslinking agents may be used singly or in combination of two or more kinds thereof.

When the organic peroxide (one of peroxide-based crosslinking agents) is used as the crosslinking agent, a crosslinking aid is preferably used for obtaining the reaction product. Examples of the crosslinking aid include divinyl compounds such as divinyl benzene; oxime compounds such as p-quinone dioxime and p,p'-dibenzoylquinone dioxime; nitroso compounds such as N-methyl-N-4-dinitrosoaniline and nitrosobenzene; maleimide compounds such as trimethylolpropane-N,N'-m-phenylene dimaleimide; polyfunctional methacrylate monomers such as ethylene glycol dimethacrylate, diethylene glycol dimethacrylate, polyethylene glycol dimethacrylate, trimethylolpropane trimethacrylate, and allyl methacrylate; polyfunctional vinyl monomers such as vinyl butyrate and vinyl stearate; and other sulfur, diphenyl guanidine, triallyl cyanurate, zinc dimethacrylate, and zinc diacrylate.

The fatty acid metal salt-based crosslinking agent refers to a fatty acid metal salt formed from a metal and a fatty acid. The fatty acid metal salt is preferably at least one selected from the group consisting of a divalent fatty acid metal salt and a trivalent fatty acid metal salt. In particular, the divalent or trivalent metal in the fatty acid metal salt is preferably, for example, at least one selected from the group consisting of aluminum, chromium, iron, gallium, indium, calcium, zinc, magnesium, beryllium, barium, and strontium. Among these metals, the trivalent metal is more preferable, trivalent aluminum or trivalent iron is further preferable, and trivalent aluminum is particularly preferable, from the viewpoint of allowing for a more increase in crosslinking density and providing a thermoplastic elastomer composition having higher resistance to compression set. The fatty acid in the fatty acid metal salt is preferably a fatty acid having 5 to 80 (more preferably 10 to 70, further preferably 15 to 60) carbon atoms. Examples of the fatty acid more preferably include stearic acid, oleic acid, palmitic acid, linoleic acid, linolenic acid, arachidonic acid, icosapentaenoic acid, docosahexaenoic acid, montanic acid, and lauric acid, more preferably stearic acid and oleic acid, particularly preferably stearic acid.

Examples of the divalent fatty acid metal salt suitable as the fatty acid metal salt include zinc distearate, calcium distearate, magnesium distearate, and barium distearate. Examples of the trivalent fatty acid metal salt suitable as the fatty acid metal salt can include aluminum tristearate, (hydroxy)aluminum distearate, (dihydroxy)aluminum monostearate, methylaluminum stearate, and ethylaluminum stearate, and in particular, aluminum tristearate, (hydroxy)aluminum distearate, and (dihydroxy)aluminum monostearate are preferable, and aluminum tristearate and (hydroxy)aluminum distearate are more preferable.

The sulfur-based crosslinking agent is not particularly limited, and a known sulfur-based crosslinking agent capable of reacting with the crosslinkable double bond and thus forming a covalently crosslinked part made by so-called sulfur crosslinking can be appropriately used. Examples of the sulfur-based crosslinking agent include sulfur-based vulcanizers such as powdery sulfur, precipitated sulfur, highly dispersible sulfur, surface-treated sulfur, inert sulfur, oil-treated sulfur, dimorpholine disulfide, and alkyl phenol disulfide, and zinc flower, magnesium oxide, litharge, p-quinone dioxime, p-dibenzoylquinone dioxime, tetrachloro-p-benzoquinone, poly-p-dinitrosobenzene, and methylenedianiline. Herein, powdery sulfur, precipitated sulfur, highly dispersible sulfur, surface-treated sulfur, inert sulfur, and oil-treated sulfur are preferable, and in particular, powdery sulfur and oil-treated sulfur are more preferable, and oil-treated sulfur is further preferable, from the viewpoint of reactivity. Such sulfur-based crosslinking agents may be used singly or in combination of two or more kinds thereof.

When the sulfur-based crosslinking agent is used as the crosslinking agent, a crosslinking aid (vulcanization promoter and/or vulcanization promotion aid) is preferably used for obtaining the reaction product. Examples of such a vulcanization promoter preferably include thiazole-based (MBT, MBTS, ZnMBT and the like), sulfenamide-based (CBS, DCBS, BBS and the like), guanidine-based (DPG, DOTG, OTBG and the like), thiuram-based (TMTD, TMTM, TBzTD, TETD, TBTD, TOTN (tetrakis(2-ethylhexyl)thiuram disulfide) and the like), dithiocarbamate-based (ZTC, NaBDC and the like), thiourea-based (ETU and the like), and xanthate-based (ZnBX and the like) vulcanization promoters. Examples of such a vulcanization promotion aid preferably include zinc oxide (for example, class 3 zinc oxides); fatty acids such as stearic acid, acetyl acid, propionic acid, butanoic acid, acrylic acid, and maleic acid; and fatty acid zinc such as acetyl acid zinc, zinc propionate, zinc butanoate, zinc stearate, zinc acrylate, zinc maleate.

The reaction product of the styrene-based block copolymer having the crosslinkable double bond in a main chain and the crosslinking agent is more preferably a reaction product of at least one selected from the group consisting of SBS, SEBS, SIS, and SEEPS, and the peroxide-based crosslinking agent, more preferably a reaction product of at least one selected from the group consisting of SBS, SEBS, and SEEPS, and the peroxide-based crosslinking agent, from the viewpoint of a more enhancement in resistance to compression set under a high-temperature environment.

The method for preparing the reaction product of the styrene-based block copolymer having the crosslinkable double bond in a main chain and the crosslinking agent is not particularly limited, but, for example, a method may be adopted which involves preparation by mixing (for example, mixing by a pressure kneader) a mixture containing the styrene-based block copolymer having the crosslinkable double bond in a main chain, the crosslinking agent, and, if necessary, the crosslinking aid under a temperature condition (preferably 60 to 250°C) so that the crosslinkable double bond and the crosslinking agent are reacted. The temperature condition in the reaction may be appropriately set to any temperature depending on the type and the like of the crosslinking agent so that such crosslinking reaction progresses.

The content of the crosslinking agent is preferably 0.1 parts by mass or more and 10 parts by mass or less, more preferably 0.5 parts by mass or more and 7 parts by mass or less, further preferably 1 part by mass or more and 5 parts by mass or less based on 100 parts by mass of the styrene-based block copolymer. When the content of the crosslinking agent is within the above range, heat sealing adhesiveness with a different material can be enhanced.

### (Plasticizer)

The thermoplastic elastomer composition includes a plasticizer as an optional additive. The plasticizer here used is preferably a process oil from the viewpoint of allowing for more enhancement in fluidity during melt molding. The "process oil" is not particularly limited, a known process oil can be appropriately used, and examples include a paraffin oil (paraffin-based oil), a naphthene oil (naphthene-based oil), and an aromatic oil (aromatic-based oil). A commercially available product may be appropriately used as the process oil.

Among these process oils, a paraffin oil is particularly preferable from the viewpoint that not only higher compatibility with an elastomer is obtained, but also yellowing due to thermal degradation can be suppressed at a higher level. Such a paraffin oil suitable as the process oil is not particularly limited, and a known paraffin oil, for example, one described in paragraph [0153] to paragraph [0157] of JP 2017-57323 A can be appropriately used. It is here preferable in such a paraffin oil that, when the oil is subjected to correlation ring analysis (n-d-M ring analysis) according to ASTM D3238-85 to determine respectively the percentage of the number of paraffin carbon atoms relative to the entire number of carbon atoms (paraffin moiety: CP), the percentage of the number of naphthene carbon atoms relative to the entire number of carbon atoms (naphthene moiety: CN), and the percentage of the number of aromatic carbon atoms relative to the entire number of carbon atoms (aromatic moiety: CA), the percentage of the number of paraffin carbon atoms relative to the entire number of carbon atoms (CP) be 60% or more. The paraffin oil preferably has a kinetic viscosity at 40°C of 5 mm²/s to 1000 mm²/s, more preferably 10 to 900 mm²/s, further preferably 15 to 800 mm²/s, as measured according to JIS K 2283 (issued in 2000). When the kinetic viscosity is within the above range, the thermoplastic elastomer composition of the present invention can be more enhanced in fluidity. Furthermore, the paraffin oil has preferably an aniline point of 0°C to 150°C, more preferably 10 to 145°C, further preferably 15 to 145°C, as measured by a U-tube method according to JIS K2256 (issued in 2013). When the aniline point is within the above range, higher compatibility between elastomer components is achieved. Herein, the methods for measuring the kinetic viscosity and the aniline points, here adopted, can be each a method described in paragraph [0153] to paragraph [0157] of JP 2017-57323 A. The method for preparing the process oil is not particularly limited, and a known method can be appropriately adopted. A commercially available product may also be used as the process oil.

The content of the plasticizer is preferably 5 parts by mass or more and 100 parts by mass or less, more preferably 10 parts by mass or more and 80 parts by mass or less, further preferably 20 parts by mass or more and 60 parts by mass or less based on 100 parts by mass of the resin component. When the content of the plasticizer is within the above range, fluidity during melt molding can be enhanced.

### (Other additives)

The thermoplastic elastomer composition may include any additive other than the above additive. As such any other additive, various additives can be each contained, such as a reinforcing agent (one filling agent: for example, silica or carbon black), a filling agent obtained by introducing an amino group, an amino group-containing compound other than the amino group-introduced filling agent, a compound containing a metal element, an anti-aging agent, an antioxidant, a pigment (dye), any plasticizer other than the process oil, a thixotropy-imparting agent, an ultraviolet absorber, a flame retardant, a solvent, a surfactant (including a leveling agent), a refresher (baking soda or the like), a dispersant, a dehydrating agent, a rust inhibitor, an adhesion-imparting agent, an antistatic agent, a filler other than clay, a lubricant, a slipping agent, a light stabilizer, a conductivity-imparting agent, an antifungal agent, a neutralizing agent, a softening agent, a filling material, a colorant, a thermally conductive filling material, and a compatibilizing agent.

### [Molded article]

The molded article of the present invention is obtained with the thermoplastic elastomer composition. Specific examples of the molded article include one obtained by insert injection molding of the thermoplastic elastomer composition together with an enclosure as a different material. The thermoplastic elastomer composition of the present invention is excellent in resistance to compression set under a high-temperature environment, fluidity during melt molding, and heat sealing adhesiveness with a different material, and thus the molded article obtained is suitable in a packing, a sealing material, a weather strip, or an interior skin material. The molded article can be suitably used in, for example, an in-vehicle electric device.

### EXAMPLES

Hereinafter, the present invention will be specifically described with reference to Examples and Comparative Examples, but the present invention is not limited to these Examples.

### <Production of thermoplastic elastomer composition>

### [Example 1]

A blended raw material obtained by mixing the following resin component and additive was melt-kneaded at 180 to 240°C by a biaxial extruder or the like, and a strand was ejected. The strand obtained was pelletized, and a thermoplastic elastomer composition was produced.

### (Resin component)

| | |
|---|---|
| · Maleic anhydride-modified polypropylene (PP) (amount of acid modification: 1.8% by mass, molecular weight (Mw): 153,000, trade name: Rikeeido MG670P manufactured by RIKEN VITAMIN CO., LTD.) | 20 parts by mass |
| · Styrene-ethylene-butylene-styrene block copolymer (SEBS) (molecular weight (Mw): 300,000, trade name: GP7533 manufactured by LCY) | 40 parts by mass |
| · Styrene-butadiene-styrene block copolymer (SBS) (molecular weight (Mw): 80,000, trade name: GP3527 manufactured by LCY) | 40 parts by mass |

### (Additive)

| | |
|---|---|
| · Paraffin oil (trade name: YU8J manufactured by ENEOS Corporation) | 30 parts by mass |
| · Maleic anhydride-modified polyolefin wax 1 (amount of acid modification: 1.5% by mass, molecular weight (Mw): about 75000, trade name: TOYOTAC PMA-L manufactured by TOYOBO CO., LTD.) | 30 parts by mass |
| · Organic peroxide crosslinking agent (trade name: PERHEXYNE 25B-40 manufactured by NOF CORPORATION) | 1.6 parts by mass |
| · Crosslinking aid (trade name: TAIC WH-60 manufactured by Mitsubishi Chemical Corporation) | 8 parts by mass |
| · Antioxidant (trade name: AO-50 manufactured by ADEKA CORPORATION) | 0.5 parts by mass |

### [Example 2]

A thermoplastic elastomer composition was produced in the same manner as in Example 1 except that the resin component was changed as follows and furthermore the amount of addition of the paraffin oil was changed to 40 parts by mass and the amount of addition of the maleic anhydride-modified polyolefin wax 1 was changed to 10 parts by mass.

### (Resin component)

| | |
|---|---|
| · Maleic anhydride-modified polypropylene (PP) (trade name: Rikeeido MG670P manufactured by RIKEN VITAMIN CO., LTD.) | 10 parts by mass |
| · Maleic anhydride-modified ethylene-butene copolymer (EBM) (amount of acid modification: 2.2% by mass, molecular weight (Mw): 156,000, trade name: Tafmer MH5040 manufactured by Mitsui Chemicals, Inc.) | 10 parts by mass |
| · Styrene-ethylene-butylene-styrene block copolymer (SEBS) (trade name: GP7533 manufactured by LCY) | 40 parts by mass |
| · Styrene-butadiene-styrene block copolymer (SBS) (trade name: GP3527 manufactured by LCY) | 40 parts by mass |

### [Example 3]

A thermoplastic elastomer composition was produced in the same manner as in Example 2 except that the amount of addition of the organic peroxide crosslinking agent was changed to 3.2 parts by mass and the amount of addition of the crosslinking aid was changed to 16 parts by mass.

### [Example 4]

A thermoplastic elastomer composition was produced in the same manner as in Example 2 except that 10 parts by mass of a maleic anhydride-modified polyolefin wax 2 (amount of acid modification: 1.5% by mass, trade name: TOYOTAC PMA-F6 manufactured by TOYOBO CO., LTD.) was added instead of the maleic anhydride-modified polyolefin wax 1.

### [Example 5]

A thermoplastic elastomer composition was produced in the same manner as in Example 2 except that 10 parts by mass of a maleic anhydride-modified polyolefin wax 3 (amount of acid modification: 2.0% by mass, molecular weight (Mw): about 60,000, trade name: TOYOTAC PMA-LE manufactured by TOYOBO CO., LTD.) was added instead of the maleic anhydride-modified polyolefin wax 1.

### [Example 6]

A thermoplastic elastomer composition was produced in the same manner as in Example 1 except that the amount of addition of the paraffin oil was changed to 60 parts by mass and 10 parts by mass of a maleic anhydride-modified liquid polybutadiene (molecular weight (Mw): about 2700, trade name: Ricon 130MA8 manufactured by Cray Valley) was added instead of the maleic anhydride-modified polyolefin wax 1.

### [Example 7]

A thermoplastic elastomer composition was produced in the same manner as in Example 1 except that the amount of addition of the paraffin oil was changed to 60 parts by mass and the amount of addition of the maleic anhydride-modified polyolefin wax 1 was changed to 10 parts by mass.

### [Example 8]

A thermoplastic elastomer composition was produced in the same manner as in Example 1 except that the amount of addition of the maleic anhydride-modified PP was changed to 15 parts by mass, the amount of addition of SEBS was changed to 42.5 parts by mass, the amount of addition of SBS was changed to 42.5 parts by mass, the amount of addition of the paraffin oil was changed to 60 parts by mass, the amount of addition of the organic peroxide crosslinking agent was changed to 1.7 parts by mass, and the amount of addition of the crosslinking aid was changed to 8.5 parts by mass.

### [Example 9]

A thermoplastic elastomer composition was produced in the same manner as in Example 7 except that the amount of addition of the maleic anhydride-modified PP was changed to 10 parts by mass and 10 parts by mass of an ethylene-butene copolymer (EBM) (molecular weight (Mw): 87,000, trade name: Tafmer DF7350 manufactured by Mitsui Chemicals, Inc.) was added.

### [Example 10]

A thermoplastic elastomer composition was produced in the same manner as in Example 8 except that 10 parts by mass of a maleic anhydride-modified liquid polybutadiene was added and 10 parts by mass of an isobutylene-maleic anhydride copolymer (trade name: Isobam 18 manufactured by Kurary Co., Ltd.) was added.

### [Example 11]

A thermoplastic elastomer composition was produced in the same manner as in Example 10 except that the amount of addition of the maleic anhydride-modified PP was changed to 20 parts by mass, 20 parts by mass of EBM was added, the amount of addition of SEBS was changed to 30 parts by mass, the amount of addition of SBS was changed to 30 parts by mass, the amount of addition of the paraffin oil was changed to 40 parts by mass, the amount of addition of the maleic anhydride-modified polyolefin wax 1 was changed to 5 parts by mass, the amount of addition of the maleic anhydride-modified liquid polybutadiene was changed to 5 parts by mass, the amount of addition of the isobutylene-maleic anhydride copolymer was changed to 5 parts by mass, the amount of addition of the organic peroxide crosslinking agent was changed to 1.2 parts by mass, and the amount of addition of the crosslinking aid was changed to 6 parts by mass.

### [Example 12]

A thermoplastic elastomer composition was produced in the same manner as in Example 10 except that the amount of addition of the maleic anhydride-modified PP was changed to 10 parts by mass, the amount of addition of SEBS was changed to 45 parts by mass, the amount of addition of SBS was changed to 45 parts by mass, the amount of addition of the paraffin oil was changed to 50 parts by mass, no isobutylene-maleic anhydride copolymer was added, the amount of addition of the organic peroxide crosslinking agent was changed to 1.8 parts by mass, and the amount of addition of the crosslinking aid was changed to 9 parts by mass.

### [Example 13]

A thermoplastic elastomer composition was produced in the same manner as in Example 7 except that 20 parts by mass of EBM was added instead of the maleic anhydride-modified PP.

### [Example 14]

A thermoplastic elastomer composition was produced in the same manner as in Example 7 except that 20 parts by mass of polypropylene (PP) (molecular weight (Mw): 190,000, trade name: PM870A manufactured by SunAllomer Ltd.) was added instead of the maleic anhydride-modified PP.

### [Example 15]

A thermoplastic elastomer composition was produced in the same manner as in Example 14 except that the amount of addition of the maleic anhydride-modified polyolefin wax 1 was changed to 30 parts by mass.

### [Comparative Example 1]

A thermoplastic elastomer composition was produced in the same manner as in Example 7 except that no maleic anhydride-modified polyolefin wax 1 was added.

### [Comparative Example 2]

A thermoplastic elastomer composition was produced in the same manner as in Example 1 except that no maleic anhydride-modified polyolefin wax 1 was added.

### [Comparative Example 3]

A thermoplastic elastomer composition was produced in the same manner as in Example 10 except that no organic peroxide crosslinking agent was added and no crosslinking aid was added.

### [Comparative Example 4]

A thermoplastic elastomer composition was produced in the same manner as in Example 2 except that no maleic anhydride-modified polyolefin wax 1 was added.

### [Comparative Example 5]

A thermoplastic elastomer composition was produced in the same manner as in Comparative Example 4 except that the amount of addition of the paraffin oil was changed to 50 parts by mass.

### [Comparative Example 6]

A thermoplastic elastomer composition was produced in the same manner as in Example 2 except that no organic peroxide crosslinking agent was added and no crosslinking aid was added.

### [Comparative Example 7]

The same melt-kneading as in Example 7 was made except that the amount of addition of the maleic anhydride-modified PP was changed to 6 parts by mass, the amount of addition of SEBS was changed to 47 parts by mass, and the amount of addition of SBS was changed to 47 parts by mass, but a composition was not collected and no pellet could be made.

### [Comparative Example 8]

The same melt-kneading as in Example 7 was made except that no maleic anhydride-modified PP was added, the amount of addition of SEBS was changed to 50 parts by mass, and the amount of addition of SBS was changed to 50 parts by mass, but a composition was not collected and no pellet could be made.

### [Example 16]

A thermoplastic elastomer composition was produced in the same manner as in Example 13 except that the amount of addition of EBM was changed to 5 parts by mass, 15 parts by mass of PP (trade name: PM870A manufactured by SunAllomer Ltd.) was added, the amount of addition of the maleic anhydride-modified polyolefin wax 1 was changed to 30 parts by mass, and 10 parts by mass of a polyester compound 1 (crystalline PET, molecular weight (Mw): 42,000, trade name: Vylon resin GM-380 manufactured by TOYOBO CO., LTD.) was added.

### [Example 17]

A thermoplastic elastomer composition was produced in the same manner as in Example 16 except that the amount of addition of the polyester compound 1 was changed to 30 parts by mass.

### [Example 18]

A thermoplastic elastomer composition was produced in the same manner as in Example 16 except that 10 parts by mass of a polyester compound 2 (amorphous PET, molecular weight (Mw): 41,000, trade name: Vylon resin 200 manufactured by TOYOBO CO., LTD.) was added instead of the polyester compound 1.

### [Example 19]

A thermoplastic elastomer composition was produced in the same manner as in Example 18 except that the amount of addition of the polyester compound 2 was changed to 30 parts by mass.

### [Example 20]

A thermoplastic elastomer composition was produced in the same manner as in Example 16 except that 10 parts by mass of a polyester compound 3 (amorphous PET, molecular weight (Mw): 5,500, trade name: Vylon resin 220 manufactured by TOYOBO CO., LTD.) was added instead of the polyester compound 1.

### [Example 21]

A thermoplastic elastomer composition was produced in the same manner as in Example 20 except that the amount of addition of the polyester compound 3 was changed to 30 parts by mass.

### [Example 22]

A thermoplastic elastomer composition was produced in the same manner as in Example 16 except that 10 parts by mass of a polyester compound 4 (crystalline PET, molecular weight (Mw): 25,000, trade name: Vylon resin GA-6400 manufactured by TOYOBO CO., LTD.) was added instead of the polyester compound 1.

### [Example 23]

A thermoplastic elastomer composition was produced in the same manner as in Example 22 except that the amount of addition of the polyester compound 4 was changed to 30 parts by mass.

### [Example 24]

A thermoplastic elastomer composition was produced in the same manner as in Example 19 except that the amount of addition of the paraffin oil was changed to 50 parts by mass and no maleic anhydride-modified polyolefin wax 1 was added.

### [Example 25]

A thermoplastic elastomer composition was produced in the same manner as in Example 24 except that 5 parts by mass of a maleic anhydride-modified EBM was added instead of EBM, the amount of addition of the paraffin oil was changed to 40 parts by mass, and 2.4 parts by mass of a fatty acid metal salt-based crosslinking agent (aluminum tristearate, trade name: AL-900 manufactured by NOF Corporation) was added.

### [Example 26]

A thermoplastic elastomer composition was produced in the same manner as in Example 25 except that the amount of addition of the paraffin oil was changed to 60 parts by mass.

### [Example 27]

A thermoplastic elastomer composition was produced in the same manner as in Example 26 except that the amount of addition of the polyester compound 2 was changed to 45 parts by mass.

### [Example 28]

A thermoplastic elastomer composition was produced in the same manner as in Example 25 except that the amount of addition of the polyester compound 2 was changed to 45 parts by mass.

### [Example 29]

A thermoplastic elastomer composition was produced in the same manner as in Example 25 except that the amount of addition of maleic anhydride-modified EBM was changed to 10 parts by mass and the amount of addition of PP was changed to 10 parts by mass.

### [Example 30]

A thermoplastic elastomer composition was produced in the same manner as in Example 29 except that the amount of addition of the paraffin oil was changed to 60 parts by mass.

### [Example 31]

A thermoplastic elastomer composition was produced in the same manner as in Example 30 except that the amount of addition of the polyester compound 2 was changed to 45 parts by mass.

### [Example 32]

A thermoplastic elastomer composition was produced in the same manner as in Example 29 except that the amount of addition of the polyester compound 2 was changed to 45 parts by mass.

### [Example 33]

A thermoplastic elastomer composition was produced in the same manner as in Example 32 except that the amount of addition of the fatty acid metal salt-based crosslinking agent was changed to 4.8 parts by mass.

### [Example 34]

A thermoplastic elastomer composition was produced in the same manner as in Example 32 except that the amount of addition of maleic anhydride-modified EBM was changed to 15 parts by mass and the amount of addition of PP was changed to 5 parts by mass.

### [Example 35]

A thermoplastic elastomer composition was produced in the same manner as in Example 1 except that the resin component and additive were changed as follows.

### (Resin component)

| | |
|---|---|
| · Maleic anhydride-modified PP | 7.5 parts by mass |
| · Maleic anhydride-modified EBM | 2.5 parts by mass |
| · SEBS | 45 parts by mass |
| · SBS | 45 parts by mass |

### (Additive)

| | |
|---|---|
| · Paraffin oil | 60 parts by mass |
| · Polyester compound 2 | 45 parts by mass |
| · Fatty acid metal salt-based crosslinking agent | 2.4 parts by mass |
| · Organic peroxide crosslinking agent | 1.8 parts by mass |
| · Crosslinking aid (trade name: TAIC WH-60 manufactured by Mitsubishi Chemical Corporation) | 9 parts by mass |
| · Antioxidant (trade name: AO-50 manufactured by ADEKA CORPORATION) | 0.5 parts by mass |

### [Example 36]

A thermoplastic elastomer composition was produced in the same manner as in Example 35 except that the amount of addition of the maleic anhydride-modified PP was changed to 3.75 parts by mass, the amount of addition of maleic anhydride-modified EBM was changed to 1.25 parts by mass, the amount of addition of SEBS was changed to 47.5 parts by mass, the amount of addition of SBS was changed to 47.5 parts by mass, the amount of addition of the crosslinking aid was changed to 9.5 parts by mass, and the amount of addition of the antioxidant was changed to 0.59 parts by mass.

### [Comparative Example 9]

A thermoplastic elastomer composition was produced in the same manner as in Example 35 except that neither the maleic anhydride-modified PP, nor the maleic anhydride-modified EBM was added, the amount of addition of SEBS was changed to 50 parts by mass, the amount of addition of SBS was changed to 50 parts by mass, the amount of addition of the crosslinking aid was changed to 10 parts by mass, and the amount of addition of the antioxidant was changed to 0.63 parts by mass.

### [Example 37]

A thermoplastic elastomer composition was produced in the same manner as in Example 35 except that the amount of addition of the maleic anhydride-modified PP was changed to 15 parts by mass, the amount of addition of maleic anhydride-modified EBM was changed to 5 parts by mass, the amount of addition of SEBS was changed to 40 parts by mass, the amount of addition of SBS was changed to 40 parts by mass, the amount of addition of the paraffin oil was changed to 70 parts by mass, the amount of addition of the polyester compound 2 was changed to 40 parts by mass, the amount of addition of the crosslinking aid was changed to 8 parts by mass, and the amount of addition of the antioxidant was changed to 0.5 parts by mass.

### [Example 38]

A thermoplastic elastomer composition was produced in the same manner as in Example 37 except that the amount of addition of the paraffin oil was changed to 60 parts by mass.

### [Example 39]

A thermoplastic elastomer composition was produced in the same manner as in Example 38 except that 0.5 parts by mass of an antioxidant 2 (trade name: PEP-36 manufactured by ADEKA CORPORATION) was added.

### [Example 40]

A thermoplastic elastomer composition was produced in the same manner as in Example 39 except that 8 parts by mass of a crosslinking aid 2 (trade name: A-DCP manufactured by SHIN-NAKAMURA CHEMICAL CO., LTD.) was added instead of the crosslinking aid (TAIC).

### [Example 41]

A thermoplastic elastomer composition was produced in the same manner as in Example 40 except that the amount of addition of the maleic anhydride-modified PP was changed to 11.25 parts by mass, the amount of addition of maleic anhydride-modified EBM was changed to 3.75 parts by mass, the amount of addition of SEBS was changed to 42.5 parts by mass, the amount of addition of SBS was changed to 42.5 parts by mass, the amount of addition of the crosslinking aid 2 was changed to 8.5 parts by mass, the amount of addition of the antioxidant was changed to 0.53 parts by mass, and the amount of addition of the antioxidant 2 was changed to 0.53 parts by mass.

### [Example 42]

A thermoplastic elastomer composition was produced in the same manner as in Example 37 except that the amount of addition of the polyester compound 2 was changed to 40 parts by mass.

### [Example 43]

A thermoplastic elastomer composition was produced in the same manner as in Example 42 except that 9 parts by mass of the crosslinking aid 2 was added instead of the crosslinking aid (TAIC) and 0.56 parts by mass of the antioxidant 2 was added.

### [Example 44]

A thermoplastic elastomer composition was produced in the same manner as in Example 38 except that no fatty acid metal salt-based crosslinking agent was added.

### [Example 45]

A thermoplastic elastomer composition was produced in the same manner as in Example 38 except that the amount of addition of the polyester compound 2 was changed to 45 parts by mass.

### [Example 46]

A thermoplastic elastomer composition was produced in the same manner as in Example 45 except that the amount of addition of the polyester compound 2 was changed to 40 parts by mass and 5 parts by mass of a compatibilizing agent (trade name: Maricom manufactured by Osaka Gas Chemicals Co., Ltd.) was added.

### [Example 47]

A thermoplastic elastomer composition was produced in the same manner as in Example 45 except that the amount of addition of the maleic anhydride-modified PP was changed to 10 parts by mass and the amount of addition of maleic anhydride-modified EBM was changed to 10 parts by mass.

### [Example 48]

A thermoplastic elastomer composition was produced in the same manner as in Example 47 except that the amount of addition of the paraffin oil was changed to 50 parts by mass.

### [Example 49]

A thermoplastic elastomer composition was produced in the same manner as in Example 46 except that 0.5 parts by mass of a cyclic trifunctional alcohol (trade name: Tanac P manufactured by NISSEI CORPORATION) was added instead of the compatibilizing agent.

### [Example 50]

A thermoplastic elastomer composition was produced in the same manner as in Example 45 except that the amount of addition of the maleic anhydride-modified PP was changed to 11.25 parts by mass, the amount of addition of maleic anhydride-modified EBM was changed to 3.75 parts by mass, the amount of addition of SEBS was changed to 42.5 parts by mass, the amount of addition of SBS was changed to 42.5 parts by mass, the amount of addition of the organic peroxide crosslinking agent was changed to 1.7 parts by mass, the amount of addition of the crosslinking aid was changed to 8.5 parts by mass, and the amount of addition of the antioxidant was changed to 0.53 parts by mass.

### [Example 51]

A thermoplastic elastomer composition was produced in the same manner as in Example 45 except that 11.25 parts by mass of PP was added instead of the maleic anhydride-modified PP, 3.75 parts by mass of EBM was added instead of the maleic anhydride-modified EBM, the amount of addition of the polyester compound 2 was changed to 40 parts by mass, and no fatty acid metal salt-based crosslinking agent was added.

### <Evaluation of physical properties>

Physical properties of the thermoplastic elastomer compositions produced in Examples 1 to 51 and Comparative Examples 1 to 6 and 9 were evaluated about the following items. The evaluation results were shown in Tables 1 to 6. Herein, the following measurements of physical properties could not be performed in the thermoplastic elastomer compositions of Comparative Examples 7 and 8, and the non-evaluated "-" was designated.

### (Preparation of measurement sheet)

Each of the thermoplastic elastomer compositions obtained in Examples and Comparative Examples was used to prepare a sheet for use in the evaluation of properties of each of the compositions as follows. First, a pressure press machine provided with a cooling mechanism by water-cooling was used, heating to 200°C was performed, thereafter 43 g of each of the thermoplastic elastomer compositions was placed in a mold of a size having a length of 15 cm, a width of 15 cm and a thickness of 2 mm, heated (pre-heated) at 200°C for 5 minutes before pressurizing, then pressurized (hot pressed) under conditions of a temperature of 200°C, a pressure of use of 20 Mpa and a pressurizing time of 5 minutes, and thereafter further cooled by water-cooling and pressed under conditions of a pressure of use of 20 Mpa and a pressurizing time of 2 minutes, and each of the thermoplastic elastomer compositions was taken out from the mold to thereby obtain a measurement sheet, having a thickness of 2 mm.

### (JIS-A hardness)

Each of the measurement sheets obtained as described above was used to measure the A hardness with a hardness meter (trade name: Durometer GX02A manufactured by Teclock) according to JIS K 6253-3.

### (Compression set)

Each of the measurement sheets obtained as described above was used to determine the compression set (C-Set) as follows. First, each of the measurement sheets was heated at 125°C for 30 minutes, and the remaining molding strain was removed. Thereafter, each of the measurement sheets was subjected to punching into a disc shape having a diameter of 29 mm and seven such discs were stacked, and a sample was prepared so as to have a height (thickness) of 12.5 ± 0.5 mm. The sample thus obtained was used, and compressed by 25% with a dedicated tool and left to still stand at 125°C for 22 hours, and thereafter the compression set (unit: %) was measured according to JIS K6262 (issued in 2013). The compression apparatus here used was trade name "vulcanized rubber compression set tester SCM-1008L" manufactured by DUMBBELL CO., LTD. A compression set of less than 70% can be said to correspond to favorable resistance to compression set under a high-temperature environment.

### (Fluidity)

Each of the thermoplastic elastomer compositions obtained in Examples and Comparative Examples was used to measure the melt flow rate (MFR, unit: g/10 min) according to a B method described in JIS K6922-2 (issued in 2010). In other words, the melt flow rate was determined by using each of the thermoplastic elastomer compositions and trade name "Melt Indexer G-01" manufactured by Toyo Seiki Seisaku-sho, Ltd., as a melt flow rate measurement apparatus, adding 3 g of each of the thermoplastic elastomer compositions into a furnace body of the apparatus, then retaining the temperature at 230°C for 5 minutes, then measuring the mass (g) per unit time flowing out through an opening (opening having a diameter of 1 mm) of an orifice member having a diameter of 1 mm and a length of 8 mm connected to the lower portion of the furnace body, under conditions of a load of 10 kg at 230°C kept (retaining the temperature in the furnace body at 230°C for 5 minutes and thereafter starting measurement of the mass of each of the thermoplastic elastomer compositions flowing out after the start of loading), and converting the resultant into the mass (g) of each of the thermoplastic elastomer compositions flowing out after 10 minutes. A MFR of 2 (g/10 min) or more can be said to correspond to favorable fluidity.

### (Heat sealing adhesiveness)

Each of the thermoplastic elastomer compositions obtained in Examples and Comparative Examples and a polybutyl terephthalate (PBT) resin piece were used to produce an adhesion strength measurement test piece according to JIS K 6850 (shear adhesion strength test), by insert injection molding. The adhesion strength measurement test piece obtained was used to measure the adhesion strength (MPa) between a molded article made of each of the thermoplastic elastomer compositions and such a PBT resin plate with a tensile tester. An adhesion strength of 0.15 MPa can be said to correspond to favorable heat sealing adhesiveness.

**[Table 1]**

| | Type of raw material | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Resin component | Maleic anhydride-modified PP | 20 | 10 | 10 | 10 | 10 | 20 | 20 | 15 | 10 | 15 | 20 | 10 |
| | Maleic anhydride-modified EBM | 0 | 10 | 10 | 10 | 10 | 0 | 0 | 0 | 0 | 0 | 0 | 0 |
| | EBM | 0 | 0 | 0 | 0 | 0 | 0 | 0 | 0 | 10 | 0 | 20 | 0 |
| | PP | 0 | 0 | 0 | 0 | 0 | 0 | 0 | 0 | 0 | 0 | 0 | 0 |
| | SEBS | 40 | 40 | 40 | 40 | 40 | 40 | 40 | 42.5 | 40 | 42.5 | 30 | 45 |
| | SBS | 40 | 40 | 40 | 40 | 40 | 40 | 40 | 42.5 | 40 | 42.5 | 30 | 45 |
| Additive | Paraffin oil | 30 | 40 | 40 | 40 | 40 | 60 | 60 | 60 | 60 | 60 | 40 | 50 |
| | Maleic anhydride-modified polyolefin wax 1 | 30 | 10 | 10 | 0 | 0 | 0 | 10 | 10 | 10 | 10 | 5 | 10 |
| | Maleic anhydride-modified polyolefin wax 2 | 0 | 0 | 0 | 10 | 0 | 0 | 0 | 0 | 0 | 0 | 0 | 0 |
| | Maleic anhydride-modified polyolefin wax 3 | 0 | 0 | 0 | 0 | 10 | 0 | 0 | 0 | 0 | 0 | 0 | 0 |
| | Maleic anhydride-modified liquid polybutadiene | 0 | 0 | 0 | 0 | 0 | 10 | 0 | 0 | 0 | 10 | 5 | 10 |
| | Isobutylene-maleic anhydride copolymer | 0 | 0 | 0 | 0 | 0 | 0 | 0 | 0 | 0 | 10 | 5 | 0 |
| | Organic peroxide crosslinking agent | 1.6 | 1.6 | 3.2 | 1.6 | 1.6 | 1.6 | 1.6 | 1.7 | 1.6 | 1.7 | 1.2 | 1.8 |
| | Crosslinking aid | 8 | 8 | 16 | 8 | 8 | 8 | 8 | 8.5 | 8 | 8.5 | 6 | 9 |
| | Antioxidant | 0.5 | 0.5 | 0.5 | 0.5 | 0.5 | 0.5 | 0.5 | 0.5 | 0.5 | 0.5 | 0.5 | 0.5 |
| Physical properties | JIS-A hardness [-] | 81 | 63 | 65 | 63 | 65 | 55 | 60 | 56 | 50 | 51 | 60 | 46 |
| | Compression set (%) | 48 | 41 | 33 | 40 | 42 | 27 | 33 | 31 | 36 | 31 | 45 | 29 |
| | Fluidity:MFR (g/10 min) | 295 | 222 | 130 | 155 | 123 | 27 | 288 | 48 | 101 | 80 | 10 | 16 |
| | Adhesion strenoth (MPa) | 0.35 | 0.31 | 0.28 | 0.31 | 0.30 | 0.20 | 0.22 | 0.20 | 0.20 | 0.26 | 0.22 | 0.24 |

**[Table 2]**

| | Type of raw material | Ex. 13 | Ex. 14 | Ex. 15 | Co.Ex. 1 | Co.Ex. 2 | Co.Ex. 3 | Co.Ex. 4 | Co.Ex. 5 | Co.Ex. 6 | Co.Ex. 7 | Co.Ex. 8 |
|---|---|---|---|---|---|---|---|---|---|---|---|---|
| Resin component | Maleic anhydride-modified PP | 0 | 0 | 0 | 20 | 20 | 20 | 10 | 10 | 10 | 6 | 0 |
| | Maleic anhydride-modified EBM | 0 | 0 | 0 | 0 | 0 | 0 | 10 | 10 | 10 | 0 | 0 |
| | EBM | 20 | 0 | 0 | 0 | 0 | 0 | 0 | 0 | 0 | 0 | 0 |
| | PP | 0 | 20 | 20 | 0 | 0 | 0 | 0 | 0 | 0 | 0 | 0 |
| | SEBS | 40 | 40 | 40 | 40 | 40 | 40 | 40 | 40 | 40 | 47 | 50 |
| | SBS | 40 | 40 | 40 | 40 | 40 | 40 | 40 | 40 | 40 | 47 | 50 |
| Additive | Paraffin oil | 60 | 60 | 60 | 60 | 30 | 30 | 40 | 50 | 40 | 60 | 60 |
| | Maleic anhydride-modified polyolefin wax 1 | 10 | 10 | 30 | 0 | 0 | 30 | 0 | 0 | 10 | 10 | 10 |
| | Maleic anhydride-modified polyolefin wax 2 | 0 | 0 | 0 | 0 | 0 | 0 | 0 | 0 | 0 | 0 | 0 |
| | Maleic anhydride-modified polyolefin wax 3 | 0 | 0 | 0 | 0 | 0 | 0 | 0 | 0 | 0 | 0 | 0 |
| | Maleic anhydride-modified liquid polybutadiene | 0 | 0 | 0 | 0 | 0 | 0 | 0 | 0 | 0 | 0 | 0 |
| | Isobutylene-maleic anhydride copolymer | 0 | 0 | 0 | 0 | 0 | 0 | 0 | 0 | 0 | 0 | 0 |
| | Organic peroxide crosslinking agent | 1.6 | 1.6 | 1.6 | 1.6 | 1.6 | 0 | 1.6 | 1.6 | 0 | 1.6 | 1.6 |
| | Crosslinking aid | 8 | 8 | 8 | 8 | 8 | 0 | 8 | 8 | 0 | 8 | 8 |
| | Antioxidant | 0.5 | 0.5 | 0.5 | 0.5 | 0.5 | 0.5 | 0.5 | 0.5 | 0.5 | 0.5 | 0.5 |
| Physical properties | JIS-A hardness | 41 | 50 | 70 | 60 | 82 | 80 | 61 | 54 | 59 | - | - |
| | Compression set (%) | 49 | 30 | 47 | 30 | 44 | 90 | 38 | 37 | 92 | - | - |
| | Fluidity:MFR (g/10 min) | 9 | 90 | 580 | 52 | 1.2 | 310 | 8.4 | 26 | 290 | - | - |
| | Adhesion strength (MPa) | 0.19 | 0.20 | 0.30 | 0.12 | 0.14 | 0.34 | 0.13 | 0.12 | 0.29 | - | - |

**[Table 3]**

| | Type of raw material | Ex. 16 | Ex. 17 | Ex. 18 | Ex. 19 | Ex. 20 | Ex. 21 | Ex. 22 | Ex. 23 |
|---|---|---|---|---|---|---|---|---|---|
| Resin component | Maleic anhydride-modified PP | 0 | 0 | 0 | 0 | 0 | 0 | 0 | 0 |
| | Maleic anhydride-modified EBM | 0 | 0 | 0 | 0 | 0 | 0 | 0 | 0 |
| | EBM | 5 | 5 | 5 | 5 | 5 | 5 | 5 | 5 |
| | PP | 15 | 15 | 15 | 15 | 15 | 15 | 15 | 15 |
| | SEBS | 40 | 40 | 40 | 40 | 40 | 40 | 40 | 40 |
| | SBS | 40 | 40 | 40 | 40 | 40 | 40 | 40 | 40 |
| Additive | Paraffin oil | 60 | 60 | 60 | 60 | 60 | 60 | 60 | 60 |
| | Maleic anhydride-modified polyolefin wax 1 | 30 | 30 | 30 | 30 | 30 | 30 | 30 | 30 |
| | Polyester compound 1 | 10 | 30 | 0 | 0 | 0 | 0 | 0 | 0 |
| | Polyester compound 2 | 0 | 0 | 10 | 30 | 0 | 0 | 0 | 0 |
| | Polyester compound 3 | 0 | 0 | 0 | 0 | 10 | 30 | 0 | 0 |
| | Polyester compound 4 | 0 | 0 | 0 | 0 | 0 | 0 | 10 | 30 |
| | Organic peroxide crosslinking agent | 1.6 | 1.6 | 1.6 | 1.6 | 1.6 | 1.6 | 1.6 | 1.6 |
| | Crosslinking aid | 8 | 8 | 8 | 8 | 8 | 8 | 8 | 8 |
| | Antioxidant | 0.5 | 0.5 | 0.5 | 0.5 | 0.5 | 0.5 | 0.5 | 0.5 |
| Physical properties | JIS-A hardness | 64 | 63 | 61 | 69 | 61 | 66 | 60 | 61 |
| | Compression set (%) | 48 | 54 | 48 | 47 | 55 | 56 | 46 | 50 |
| | Fluidity:MFR (g/10 min) | 465 | 515 | 461 | 458 | 517 | 530 | 446 | 483 |
| | Adhesion strength (MPa) | 0.26 | 0.30 | 0.27 | 0.38 | 0.26 | 0.38 | 0.22 | 0.27 |

**[Table 4]**

| | Type of raw material | Ex. 24 | Ex. 25 | Ex. 26 | Ex. 27 | Ex. 28 | Ex. 29 | Ex. 30 | Ex. 31 | Ex. 32 | Ex. 33 | Ex. 34 |
|---|---|---|---|---|---|---|---|---|---|---|---|---|
| Resin component | Maleic anhydride-modified PP | 0 | 0 | 0 | 0 | 0 | 0 | 0 | 0 | 0 | 0 | 0 |
| | Maleic anhydride-modified EBM | 0 | 5 | 5 | 5 | 5 | 10 | 10 | 10 | 10 | 10 | 15 |
| | EBM | 5 | 0 | 0 | 0 | 0 | 0 | 0 | 0 | 0 | 0 | 0 |
| | PP | 15 | 15 | 15 | 15 | 15 | 10 | 10 | 10 | 10 | 10 | 5 |
| | SEBS | 40 | 40 | 40 | 40 | 40 | 40 | 40 | 40 | 40 | 40 | 40 |
| | SBS | 40 | 40 | 40 | 40 | 40 | 40 | 40 | 40 | 40 | 40 | 40 |
| Additive | Paraffin oil | 50 | 40 | 60 | 60 | 40 | 40 | 60 | 60 | 40 | 40 | 40 |
| | Polyester compound 2 | 30 | 30 | 30 | 45 | 45 | 30 | 30 | 45 | 45 | 45 | 45 |
| | Fatty acid metal salt-based crosslinking agent | 0 | 2.4 | 2.4 | 2.4 | 2.4 | 2.4 | 2.4 | 2.4 | 2.4 | 4.8 | 2.4 |
| | Organic peroxide crosslinking agent | 1.6 | 1.6 | 1.6 | 1.6 | 1.6 | 1.6 | 1.6 | 1.6 | 1.6 | 1.6 | 1.6 |
| | Crosslinking aid | 8 | 8 | 8 | 8 | 8 | 8 | 8 | 8 | 8 | 8 | 8 |
| | Antioxidant | 0.5 | 0.5 | 0.5 | 0.5 | 0.5 | 0.5 | 0.5 | 0.5 | 0.5 | 0.5 | 0.5 |
| Physical properties | JIS-A hardness | 62 | 70 | 60 | 69 | 79 | 63 | 48 | 58 | 70 | 70 | 66 |
| | Compression set (%) | 30 | 31 | 31 | 33 | 36 | 33 | 32 | 35 | 37 | 37 | 47 |
| | Fluidity: MFR (g/10 min) | 15.0 | 4.8 | 7.3 | 27.6 | 7.4 | 0.9 | 3.5 | 3.9 | 2.7 | 2.6 | 0.6 |
| | Adhesion strength (MPa) | 0.24 | 0.33 | 0.23 | 0.34 | 0.48 | 0.28 | 0.21 | 0.30 | 0.36 | 0.39 | 0.36 |

**[Table 5]**

| | Type of raw material | Ex. 35 | Ex. 36 | Co.Ex. 9 | Ex. 37 | Ex. 38 | Ex. 39 | Ex. 40 | Ex. 41 | Ex. 42 | Ex. 43 |
|---|---|---|---|---|---|---|---|---|---|---|---|
| Resin component | Maleic anhydride-modified PP | 7.5 | 3.75 | 0 | 15 | 15 | 15 | 15 | 11.25 | 7.5 | 7.5 |
| | Maleic anhydride-modified EBM | 2.5 | 1.25 | 0 | 5 | 5 | 5 | 5 | 3.75 | 2.5 | 2.5 |
| | EBM | 0 | 0 | 0 | 0 | 0 | 0 | 0 | 0 | 0 | 0 |
| | PP | 0 | 0 | 0 | 0 | 0 | 0 | 0 | 0 | 0 | 0 |
| | SEBS | 45 | 47.5 | 50 | 40 | 40 | 40 | 40 | 42.5 | 45 | 45 |
| | SBS | 45 | 47.5 | 50 | 40 | 40 | 40 | 40 | 42.5 | 45 | 45 |
| Additive | Paraffin oil | 60 | 60 | 60 | 70 | 60 | 60 | 60 | 60 | 60 | 60 |
| | Polyester compound 2 | 45 | 45 | 45 | 40 | 40 | 40 | 40 | 45 | 40 | 40 |
| | Fatty acid metal salt-based crosslinking agent | 2.4 | 2.4 | 2.4 | 2.4 | 2.4 | 2.4 | 2.4 | 2.4 | 2.4 | 2.4 |
| | Organic peroxide crosslinking agent | 1.6 | 1.6 | 1.6 | 1.6 | 1.6 | 1.6 | 1.6 | 1.6 | 1.6 | 1.6 |
| | Crosslinking aid | 9 | 9.5 | 10 | 8 | 8 | 8 | 0 | 0 | 9 | 0 |
| | Crosslinking aid 2 | 0 | 0 | 0 | 0 | 0 | 0 | 8 | 8.5 | 0 | 9 |
| | Antioxidant | 0.56 | 0.59 | 0.63 | 0.5 | 0.5 | 0.5 | 0.5 | 0.53 | 0.56 | 0.56 |
| | Antioxidant 2 | 0 | 0 | 0 | 0 | 0 | 0.5 | 0.5 | 0.53 | 0 | 0.56 |
| Physical properties | JIS-A hardness | 66 | 65 | 60 | 63 | 66 | 66 | 72 | 73 | 61 | 69 |
| | Compression set (%) | 43 | 58 | 75 | 28 | 30 | 31 | 33 | 32 | 33 | 34 |
| | Fluidity: MFR (g/10 min) | 5.8 | 4.1 | 3.3 | 15.8 | 10.1 | 13.8 | 5.3 | 3.7 | 4.2 | 2.3 |
| | Adhesion strength (MPa) | 0.34 | 0.36 | 0.27 | 0.30 | 0.36 | 0.35 | 0.36 | 0.37 | 0.28 | 0.30 |

**[Table 6]**

| | Type of raw material | Ex. 44 | Ex. 45 | Ex. 46 | Ex. 47 | Ex. 48 | Ex. 49 | Ex. 50 | Ex. 51 |
|---|---|---|---|---|---|---|---|---|---|
| Resin component | Maleic anhydride-modified PP | 15 | 15 | 15 | 10 | 10 | 15 | 11.25 | 0 |
| | Maleic anhydride-modified EBM | 5 | 5 | 5 | 10 | 10 | 5 | 3.75 | 0 |
| | EBM | 0 | 0 | 0 | 0 | 0 | 0 | 0 | 3.75 |
| | PP | 0 | 0 | 0 | 0 | 0 | 0 | 0 | 11.25 |
| | SEBS | 40 | 40 | 40 | 40 | 40 | 40 | 42.5 | 42.5 |
| | SBS | 40 | 40 | 40 | 40 | 40 | 40 | 42.5 | 42.5 |
| Additive | Paraffin oil | 60 | 60 | 60 | 60 | 50 | 60 | 60 | 60 |
| | Polyester compound 2 | 40 | 45 | 40 | 45 | 45 | 40 | 45 | 40 |
| | Fatty acid metal salt-based crosslinking agent | 0 | 2.4 | 2.4 | 2.4 | 2.4 | 2.4 | 2.4 | 0 |
| | Organic peroxide crosslinking agent | 1.6 | 1.6 | 1.6 | 1.6 | 1.6 | 1.6 | 1.7 | 1.7 |
| | Crosslinking aid | 8 | 8 | 8 | 8 | 8 | 8 | 8.5 | 8.5 |
| | Antioxidant | 0.5 | 0.5 | 0.5 | 0.5 | 0.5 | 0.5 | 0.53 | 0.53 |
| | Cyclic trifunctional alcohol | 0 | 0 | 0 | 0 | 0 | 0.5 | 0 | 0 |
| | Compatibilizing agent | 0 | 0 | 5 | 0 | 0 | 0 | 0 | 0 |
| Physical properties | JIS-A hardness | 68 | 68 | 70 | 60 | 65 | 68 | 66 | 60 |
| | Compression set (%) | 32 | 31 | 33 | 39 | 39 | 30 | 27 | 31 |
| | Fluidity: MFR (g/10 min) | 12 | 10.2 | 10.5 | 2.6 | 2.2 | 9.8 | 8.8 | 10.0 |
| | Adhesion strength (MPa) | 0.37 | 0.37 | 0.39 | 0.32 | 0.37 | 0.34 | 0.36 | 0.28 |

## Claims

1. A thermoplastic elastomer composition comprising a resin component and an additive, wherein
the resin component comprises a styrene-based block copolymer containing a covalently crosslinked part, and a polyolefin having a weight average molecular weight of 80,000 or more and 500,000 or less, a content of the styrene-based block copolymer is 40% by mass or more and 95% by mass or less relative to the entire resin component, and a content of the polyolefin is 5% by mass or more and 60% by mass or less relative to the entire resin component, and
the additive comprises an acid-modified compound having a weight average molecular weight of 1,000 or more and less than 80,000 and having a functional group derived from a carboxylic acid- and/or its derivative, and/or a polyester compound, and a crosslinking agent capable of crosslinking at least one of the styrene-based block copolymer and the polyolefin.

2. The thermoplastic elastomer composition according to claim 1, wherein a content of the acid-modified compound is 1 part by mass or more and 50 parts by mass or less based on 100 parts by mass of the resin component.

3. The thermoplastic elastomer composition according to claim 1 or 2, wherein a content of the polyester compound is 10 parts by mass or more and 70 parts by mass or less based on 100 parts by mass of the resin component.

4. The thermoplastic elastomer composition according to any one of claims 1 to 3, wherein
the polyolefin comprises at least one of polypropylene and a maleic anhydride-modified polypropylene, and
weight average molecular weights of the polypropylene and the maleic anhydride-modified polypropylene are 100,000 or more and 200,000 or less.

5. The thermoplastic elastomer composition according to any one of claims 1 to 4, wherein
the polyolefin comprises at least one of an ethylene-butene copolymer and a maleic anhydride-modified ethylene-butene copolymer, and
weight average molecular weights of the ethylene-butene copolymer and the maleic anhydride-modified ethylene-butene copolymer are 80,000 or more and 160,000 or less.

6. The thermoplastic elastomer composition according to any one of claims 1 to 5, wherein a weight average molecular weight of the acid-modified compound is 10,000 or more and 77,000 or less.

7. The thermoplastic elastomer composition according to any one of claims 1 to 6, wherein the acid-modified compound is a maleic anhydride-modified compound.

8. The thermoplastic elastomer composition according to claim 7, wherein the maleic anhydride-modified compound is at least one selected from the group consisting of a maleic anhydride-modified polyolefin, a maleic anhydride-modified polybutadiene, and an isobutylene-maleic anhydride copolymer.

9. The thermoplastic elastomer composition according to any one of claims 1 to 8, wherein the styrene-based block copolymer is at least one selected from the group consisting of a styrene-butadiene-styrene block copolymer, a styrene-isoprene-styrene block copolymer, a styrene-isoprene-butadiene-styrene block copolymer, a styrene-ethylene-butylene-styrene block copolymer, a styrene-ethylene-propylene-styrene block copolymer, and a styrene-ethylene-ethylene-propylene-styrene block copolymer.

10. The thermoplastic elastomer composition according to any one of claims 1 to 9, wherein the crosslinking agent is at least one selected from the group consisting of a peroxide-based crosslinking agent and a fatty acid metal salt-based crosslinking agent.

11. The thermoplastic elastomer composition according to any one of claims 1 to 10, wherein
the additive further comprises a plasticizer, and
a content of the plasticizer is 5 parts by mass or more and 100 parts by mass or less based on 100 parts by mass of the resin component.

12. The thermoplastic elastomer composition according to claim 11, wherein the plasticizer is a process oil.

13. The thermoplastic elastomer composition according to any one of claims 1 to 12, wherein the thermoplastic elastomer composition is used in insert injection molding.

14. A molded article obtained with the thermoplastic elastomer composition according to any one of claims 1 to 13.

15. The molded article according to claim 14, wherein the molded article is a packing, a sealing material, a weather strip, or an interior skin material.
